# EUROPÄISCHE PATENTSCHRIFT

(11) **EP 2 691 325 B1**
(45) Veröffentlichungstag und Bekanntmachung des Hinweises auf die Patenterteilung: **26.08.2015**
(21) Anmeldenummer: 12713116.7
(22) Anmeldetag: 30.03.2012
(51) Int. Cl.: B65G 47/88

(54) **ROLLENFÖRDERMODUL MIT SEPARATIONSVORRICHTUNG**
ROLLER CONVEYING MODULE WITH SEPARATING DEVICE
MODULE DE TRANSPORT À ROULEAUX COMPORTANT UN DISPOSITIF DE SÉPARATION

(30) Priorität: 30.03.2011 DE 202011004513 U
(43) Veröffentlichungstag der Anmeldung: 05.02.2014
(73) Patentinhaber: Interroll Holding AG, 6592 Sant' Antonino (CH)
(72) Erfinder: RIBAU, Yannick, F-44840 Les Sorinières (FR)
(74) Vertreter: Eisenführ Speiser
(86) Internationale Anmeldenummer: PCT/EP2012/055785
(87) Internationale Veröffentlichungsnummer: WO 2012/131034

(56) Entgegenhaltungen:
- EP-A2- 1 897 823
- DE-A1- 4 413 475
- DE-A1- 19 502 888
- DE-A1- 19 636 842
- US-A- 4 185 729

## Beschreibung

Die Erfindung betrifft ein Rollenfördermodul mit einer Separationsvorrichtung für eine schwerkraftbetätigte Rollenförderanlage.

Bei einer schwerkraftbetätigten Rollenförderanlage wird das Fördergut auf einer abschüssigen Förderbahn gefördert. Solche, zur Horizontalen geneigt angeordnete Förderstrecken können mit anderen Förderstrecken, in denen das Fördergut durch einen Antrieb auf horizontaler Ebene oder aufwärts bewegt wird, kombiniert sein.

Ein häufiges Einsatzgebiet schwerkraftbetätigter Rollenförderbahnen ist ein Endabschnitt einer Rollenfördervorrichtung, in dem die geförderten Gegenstände gelagert werden, um sie aus der Rollenfördervorrichtung zu entnehmen. Ein Beispiel hierfür ist die Anordnung von Fördergut auf Paletten, die nach erfolgter Förderung in einem Endfördermodul angeordnet sind und von diesem Endfördermodul durch einen Gabelstapler abgehoben werden können.

Grundsätzlich ist es bekannt, zu diesem Zweck ein Rollenfördermodul bereitzustellen, welches einen Endanschlag an seinem hintersten Ende aufweist und dazu dient, um die geförderten Produkte aufzunehmen und das Abheben der geförderten Produkte zu ermöglichen. Ein Problem bei solchen Rollenfördermodulen besteht darin, dass mehrere geförderte Produkte aneinander liegend darauf angeordnet sein können und hierdurch Druck aufeinander ausüben. Das letzte, zwischen Endanschlag und dem vorletzten Produkt angeordnete Produkt kann hierdurch eingeklemmt werden, was die Entnahme dieses Produkts erschwert, verhindern kann und die Gefahr der Beschädigung des Produkts oder der benachbarten Produkte zur Folge hat.

Es ist grundsätzlich bekannt, eine Separationsvorrichtung bei solchen Rollenfördermodulen bereitzustellen, welche einen Abstand zwischen dem letzten und dem vorletzten Produkt, die auf dem Rollenfördermodul angeordnet sind, sicherstellt. Hierdurch wird eine Entnahme des letzten Produkts ermöglicht, ohne dass hierbei der Druck der nachgeführten Produkte auf das letzte Produkt diese Entnahme erschwert.

Ein erstes Problem mit solchen Separationsvorrichtungen besteht darin, dass sie ein zuverlässiges und schnelles Nachfördern der Produkte ermöglichen muss, sobald ein letztes Produkt von dem Rollenfördermodul entnommen worden ist.

Ein weiteres Problem bei solchen Separationsvorrichtungen besteht darin, dass Fördergüter von sehr unterschiedlichen Gewichten gefördert werden müssen und dies darüber hinaus auch unmittelbar aufeinanderfolgend in sicherer Weise gewährleistet sein muss. Es besteht daher ein Bedarf für eine Separationsvorrichtung, die eine sichere Separation von Fördergütern auch dann erzielt, wenn ein sehr leichtes von einem sehr schweren Produkt gefolgt wird oder ein sehr schweres von einem sehr leichten Produkt gefolgt wird.

Schließlich besteht Bedarf für eine Separationsvorrichtung, welche es sicherstellt, dass auch bei einer verzögerten Entnahme, insbesondere einem verzögerten vertikalen Abheben des letzten geförderten Produkts von der Rollenförderbahn sicherstellt, dass kein nachgefördertes Produkt in Kontakt mit dem entnommenen Produkt tritt.

Aus US 4,185,729 ist ein Abstandsmechanismus für eine Lastfördereinrichtung bekannt. Hierbei ist ein Betätigungselement an dem Förderer schwenkbar zwischen einer ausgefahrenen und einer zurückgezogenen Position montiert und mittels einer Hebelverbindung mit einem Stützmechanismus verbunden. Der Stützmechanismus hält einen Stoppmechanismus in einer angehobenen Position, um eine Last auf der Fördereinrichtung zu stoppen. Wird eine Last, die auf dem Betätigungselement liegt, angehoben, betätigt die Hebelverbindung aufgrund der Bewegung des Betätigungselements in die ausgefahrene Position einen Anschlag der Stoppstütze weg aus der Stoppposition und erlaubt daher der Last, den Stoppmechanismus abwärts zu bewegen und darüber zu laufen in Richtung des Betätigungsmechanismus.

Aus DE 195 02 888 A1 ist eine Vorrichtung zum Zurückhalten von entlang einer Rollenbahn verfahrbaren Paletten bekannt. Ein Schaltelement ragt in den Förderweg hinein und wird durch die Paletten selbst betätigt. Ein Betätigungselement ist mit dem Schaltelement über ein Gestänge verbunden und wirkt auf ein in den Förderweg einschwenkbares Rückhalteelement ein.

DE 195 02 888 A1 offenbart ein Rollenfördermodul gemäß dem Oberbegriff des Anspruchs 1.

Der Erfindung liegt die Aufgabe zugrunde, eine Separationsvorrichtung bereitzustellen, welche zumindest einen, vorzugsweise mehrere der zuvor erläuterten, bedarfsgemäßen Eigenschaften aufweist.

Diese Aufgabe wird erfindungsgemäß durch ein Rollenfördermodul nach Anspruch 1 gelöst.

Das erfindungsgemäße Rollenfördermodul weist den Vorteil auf, dass es sowohl schwere als auch leichte Fördergüter zuverlässig mit Hilfe des Sperrhebels auf einer Warteposition stoppen kann. Darüberhinaus weist das erfindungsgemäße Rollenfördermodul den Vorteil auf, dass es den Sperrhebel zur Weiterbeförderung sowohl mittels eines schweren als auch mittels einen leichten Fördergutes, welches von dem Rollenfördermodul aus einer Endposition entfernt wird, freigeben kann, so dass ein damit gesperrtes Fördergut weiter aus der Warteposition in die Endposition gefördert werden kann. Diese Funktionen werden in jeder Kombination von leichtem zu schwerem Fördergut sicher ausgeführt.

Dies wird erreicht, in dem die Separierungs- und Freigabefunktion des Rollenfördermoduls auf insgesamt zumindest drei relativ zueinander bewegliche Elemente aufgeteilt wird, die in bestimmter Weise miteinander zusammenwirken. Zum einen wird ein Sperrabschnitt an einem Sperrhebel bereitgestellt, der ein Fördergut in seiner Förderbewegung in der Warteposition aufhält, wenn er über die Auflagefläche der Förderstrecke hinausragt und die Förderbewegung freigibt, wenn er unter die Auflagefläche der Förderstrecke bewegt ist.

Weiterhin ist ein Verriegelungselement vorhanden, welches in der Sperrsituation in Kontakt mit einer an dem Sperrhebel ausgebildeten Arritierfläche ist. Durch diesen Kontakt wird mittels des Verriegelungselementes verhindert, dass der Sperrhebel aus der Sperrposition in die Freigabeposition bewegbar ist. Diese Position des Verriegelungselementes wird daher als Verriegelungsposition bezeichnet. Wird das Verriegelungselement aus dieser Verriegelungsposition in eine Entriegelungsposition bewegt, so besteht dieser Kontakt zwischen Verriegelungsfläche und Arretierfläche nicht mehr, so dass der Sperrhebel in der Lage ist, sich in die Freigabeposition zu bewegen, wodurch das Fördergut nicht weiter vom Sperrhebel aufgehalten wird und sich aus der Warteposition entlang der Förderstrecke weiter in die Endposition bewegen kann.

Die Auslösung des Verriegelungselementes aus der Verriegelungsposition in die Entriegelungsposition erfolgt mittels eines Betätigungshebels, der mit dem Verriegelungselement über eine Kopplungsvorrichtung mechanisch gekoppelt ist. Der Betätigungshebel ist beabstandet vom Sperrhebel im Bereich der Endposition angeordnet und solcherart platziert, dass er durch ein in Förderrichtung hinter dem Sperrhebel in der Endposition liegendes Fördergut in einem unterhalb der Auflagefläche liegende Halteposition gehalten ist. In dieser Halteposition wird das Verriegelungselement in der Verriegelungsposition gehalten und folglich der Sperrhebel in der Sperrposition gehalten. Wenn sich der Betätigungshebel aus dieser Halteposition in eine Auslöseposition bewegt, indem das über ihm angeordnete Fördergut wegbewegt, beispielsweise angehoben wird, so wird durch die mechanische Kopplung über den Betätigungshebel das Verriegelungselement in die Entriegelungsposition bewegt und folglich der Sperrhebel zur Bewegung in die Freigabeposition entriegelt.

Grundsätzlich ist zu verstehen, dass unter einem Hebel im Sinne dieser Beschreibung und der Ansprüche ein mechanisches Element zu verstehen ist, welches beweglich geführt ist. Diese bewegliche Führung kann in einer Schwenkbarkeit um eine Achse, einer Verschieblichkeit entlang einer Kulisse oder einer zusammengesetzten Bewegung aus mehreren Gelenken, Kulissenführungen bestehen.

Gemäß einer ersten bevorzugten Ausführungsform ist vorgesehen, dass der Sperrhebel um eine unterhalb der Auflagefläche angeordnete Sperrhebelachse schwenkbar gelagert ist und in der Freigabeposition gegenüber der Sperrposition um die Sperrhebelachse verschwenkt ist, das Verriegelungselement um eine unterhalb der Auflagefläche angeordnete Verriegelungselementachse schwenkbar gelagert ist, und/oder der Betätigungshebel schwenkbar um eine unterhalb der Auflagefläche angeordnete Betätigungshebelachse gelagert ist.

Mit diesen Ausführungsformen wird einerseits eine bevorzugte, robuste Beweglichkeit von Sperrhebel, Verriegelungselement und Betätigungshebel bereitgestellt, indem eine Verschwenkbarkeit um eine definierte Achse vorgesehen wird. Zudem wird durch die Anordnung dieser Achse unterhalb der Auflagefläche der Förderstrecke ein kompakter Aufbau ohne seitlich über die Förderstrecke hinaus ragende Führungselemente, Achsen, Umlenkhebel oder dergleichen erzielt.

Erfindungsgemäß ist vorgesehen, dass der Sperrhebel um eine unterhalb der Auflagefläche angeordnete Sperrhebelachse schwenkbar gelagert ist und die Arretierfläche an einer an dem Sperrhebel angeordneten Rolle ausgebildet ist, das Verriegelungselement eine Verriegelungsfläche und eine an die Verriegelungsfläche angrenzende Entriegelungsfläche aufweist und das Verriegelungselement und der Sperrhebel solcherart beweglich gelagert sind, dass die Rolle sich in der Verriegelungsposition an der Verriegelunsgfläche abstützt und hierdurch eine Verschwenkung des Sperrhebels in einer Richtung, in der sich die Sperrfläche in Förderrichtung bewegt, blockiert, die Rolle in der Entriegelungsposition bei Verschwenkung des Sperrhebels in einer Richtung, in der sich die Sperrfläche in Förderrichtung bewegt, an der Entriegelungsfläche entlangrollt. Mit dieser Ausgestaltung wird einerseits eine zuverlässige Zusammenwirkung zwischen Arretierfläche und Verriegelungsfläche erzielt, indem die Arretierfläche als drehbar an den Sperrhebel gelagerte Rolle ausgebildet ist. Hierdurch kann eine gezielte und zuverlässige Blockierung des Sperrhebels in einer Richtung erfolgen und hierdurch ein Fördern von Fördergut in Förderrichtung verhindert werden. Bevorzugt liegt die Sperrhebelachse zwischen dem Sperrabschnitt und der Arretierfläche, wodurch vorteilhafte Hebelverhältnisse an dem Sperrhebel erreicht werden und auch schweres Fördergut zuverlässig gesperrt werden kann. Durch die Bereitstellung einer Entriegelungsfläche kann darüber hinaus der Vorgang der Freigabe des Förderguts in kontrollierter Weise ablaufen, wodurch eine verfrühte Freigabe des Förderguts verhindert werden kann.

In einer hierzu alternativen bevorzugten Ausführungsform ist vorgesehen, dass der Sperrhebel um eine unterhalb der Auflagefläche angeordnete Sperrhebelachse schwenkbar gelagert ist, die Arretierfläche und eine an die Arretierfläche angrenzende Entriegelungsfläche aufweist, an dem Verriegelungselement eine Rolle angeordnet ist, und das Verriegelungselement und der Sperrhebel solcherart beweglich gelagert sind, dass die Rolle sich in der Verriegelungsposition an der Arretierungsfläche des Sperrhebels abstützt und hierdurch eine Verschwenkung des Sperrhebels in einer Richtung, in der sich die Sperrfläche in Förderrichtung bewegt, blockiert, die Rolle in der Entriegelungsposition bei Verschwenkung des Sperrhebels in einer Richtung, in der sich die Sperrfläche in Förderrichtung bewegt, entlang der Entriegelungsfläche entlangrollt.

Auch bei dieser Ausgestaltung wird ein vorteilhaftes Zusammenwirken zwischen Sperrhebel und Verriegelungselement durch eine Rolle erreicht, die in diesem Fall jedoch drehbar am Verriegelungselement gelagert ist. Diese Rolle stützt sich in der Verriegelungsposition an der Arretierfläche ab und rollt im Zuge der Bewegung des Sperrhebels aus der Sperrposition in die Freigabeposition an einer Entriegelungsfläche entlang, wodurch wiederum eine kontrollierte Freigabe des Förderguts zur weiteren Förderung erreicht wird.

Erfindungsgemäß ist weiterhin vorgesehen, dass das Verriegelungselement einen Verriegelungshebel und einen relativ zum Verriegelungshebel beweglichen Verriegelungshaken umfasst, der Verriegelungshaken mechanisch mit dem Betätigungshebel gekoppelt ist und der Verriegelungshebel und der Verriegelungshaken solcherart beweglich gelagert sind, dass der Verriegelungshaken in einer Sicherungsposition in den Verriegelungshebel eingehakt ist und den Verriegelungshebel in der Verriegelungsposition fixiert, in der dieser eine Verschwenkung des Sperrhebels in die Freigabeposition blockiert, und der Verriegelungshaken durch die Kopplung mit dem Betätigungshebel aus der Sicherungsposition in eine Entsicherungsposition bewegt, insbesondere verschwenkt wird und hierdurch eine Verschwenkung des Verriegelungshebels aus der Verriegelungsposition in die Entriegelungsposition freigibt, wenn der Betätigungshebel aus der Halteposition in die Freigabeposition bewegt wird.

Hindurch wird eine zusätzliche Sicherheit erzielt, die ein unbeabsichtigtes Auslösen des Fördervorgangs des in der Warteposition gesperrten Förderguts verhindert. Zu diesem Zweck wird ein Verriegelungshaken bereitgestellt. Dieser Verriegelungshaken ist solcherart angeordnet und gelagert, dass er aus einer Verriegelungsposition in eine Entriegelungsposition bewegt werden muss, um die Bewegung des Verriegelungshebels aus der Verriegelungsposition in die Entriegelungsposition zu ermöglichen. Bei dieser Ausführungsform ist folglich das den Sperrhebel verriegelnde Verriegelungselement durch zwei Bauteile gebildet, die eine zusätzliche Sicherung dieser Verriegelung erzielen. Das eine dieser beiden Elemente, der Verriegelungshaken, wird durch den Betätigungshebel mittels mechanischer Kopplung betätigt und kann aus einer Sicherungsposition in eine Entsicherungsposition bewegt werden. Nur in dieser Entsicherungsposition kann wiederum das andere dieser Elemente, der Verriegelungshebel, aus der Verriegelungsposition in die Entriegelungsposition bewegt werden und gibt hierdurch die Bewegung des Sperrhebels frei. Dabei kann der Verriegelungshebel seinerseits ebenfalls mit dem Betätigungshebel mechanisch gekoppelt sein oder kann solcherart gelagert und ggf. mechanisch vorgespannt oder durch Gegengewichte gehalten sein, dass er durch die auf ihn wirkenden, vom Fördergut übertragenen Kräfte selbsttätig in die Entriegelungsposition verschwenkt, wenn der Verriegelungshaken dies freigibt und darauffolgend selbsttätig wieder in die Verriegelungsposition zurück verschwenkt, wenn die Kraft des Förderguts auf den Sperrhebel entfällt.

Gemäß einer weiteren bevorzugten Ausführungsform ist vorgesehen, dass der Sperrhebel durch ein Gegengewicht oder eine Vorspannkraft in die Sperrposition vorgespannt ist, das Verriegelungselement durch ein Gegengewicht oder eine Vorspannkraft in die Verriegelungsposition vorgespannt ist und/oder der Betätigungshebel durch ein Gegengewicht oder eine Vorspannkraft in die Auslöseposition vorgespannt ist.

Mit dieser Ausgestaltung wird erreicht, dass Sperrhebel und Verriegelungselement in eine Position vorgespannt bzw. durch Gewichtskraft bewegt werden, welche die Sperrposition darstellt bzw. verriegelt. Dies erzeugt eine Sicherheit dahingehend, dass ein unbeabsichtigtes Verbleiben der Elemente in einer freigebenden Position verhindert wird und folglich ein Fördergut unbeabsichtigt weitergefördert wird. Zudem wird hierdurch sichergestellt, dass der Sperrhebel unmittelbar nachdem ein freigegebenes Fördergut ihn passiert hat, zurück in die Sperrposition sich bewegt und in dieser Sperrposition durch entsprechende Nachfolgebewegungen des Verriegelungselementes verriegelt wird.

Noch weiter ist es bevorzugt, dass der Betätigungshebel aus einer unterhalb der Auflagefläche liegenden Auslöseposition in eine oberhalb der Auflagefläche liegenden Halteposition bewegbar ist, die Halteposition durch einen Endanschlag begrenzt wird, und der Betätigungshebel solcherart mit dem Verriegelungselement mechanisch gekoppelt ist, dass das Verriegelungselement bei der Bewegung des Betätigungshebels aus der Halteposition in die Auslöseposition erst nach 50-90%, vorzugsweise 60-80%, des Gesamtwegs zwischen Halte- und Auslöseposition in die Entriegelungsposition bewegt wird, so dass der Sperrhebel aus der Sperr- in die Freigabeposition bewegbar ist.

Mit dieser Ausführungsform wird sichergestellt, dass ein in der Endposition liegendes Fördergut im Zuge seines Abhebens nicht unmittelbar ein auf der Warteposition liegendes Fördergut freigibt, so dass eine Kollision der Fördergüter auftreten könnte. Stattdessen wird erst nachdem das aus der Endposition abgehobene Fördergut um eine vorbestimmte Wegstrecke angehoben worden ist, die Bewegung des Sperrhebels aus der Sperrposition in die Freigabeposition ermöglicht und ein Nachfördern des Förderguts aus der Halteposition in die Endposition freigegeben.

Noch weiter ist es bevorzugt, dass der Betätigungshebel zumindest um weniger als die Länge von einer Europalette von dem Sperrhebel beabstandet ist. Mit dieser Ausgestaltung wird die Einhaltung von einem das Vereinzeln ermöglichenden Abstandes zwischen zwei Fördergütern in Europalettenformat zuverlässig ermöglicht.

Gemäß einer weiteren bevorzugten Ausführungsform ist vorgesehen, dass der Betätigungshebel mit dem Verriegelungselement über eine Zug- oder Druckstange oder ein Zugkabel verbunden ist. Mit dieser Ausgestaltung wird eine belastbare und robuste mechanische Kopplung zwischen Betätigungshebel und Verriegelungselement bereitgestellt.

Schließlich ist gemäß einer weiteren bevorzugten Ausführungsform ein an dem in Förderrichtung hinteren Ende des Rollenfördermoduls angeordneten Endanschlag, der vorzugsweise um mehr als die Länge einer Europalette von dem Sperrhebel beabstandet ist, vorgesehen. Mit dieser Ausgestaltung wird eine am Ende des Fördermoduls ausgebildete Endposition durch einen Endanschlag definiert und ein Fördern von Fördergut über diese Endposition hinaus zuverlässig verhindert.

Bevorzugte Ausführungsformen werden anhand der beiliegenden Figuren erläutert. Es zeigen:
- Fig. 1: eine längsgeschnittene Seitenansicht einer Ausführungsform eines Rollenfördermoduls,
- Fig. 1a: eine Detailansicht eines Ausschnitts aus Figur 1,
- Fig. 2: eine perspektivische Detailansicht der Ausführungsform gemäß Figur 1,
- Fig. 3: eine perspektivische Draufsicht des Rollenfördermoduls gemäß der ersten Ausführungsform,
- Fig. 4: a-deinen Ablauf einer Vereinzelung von Fördergütern mittels der ersten Ausführungsform,
- Fig. 5: eine Seitenansicht eines Details der ersten Ausführungsform in einer Sperrstellung,
- Fig. 6: eine Ansicht gemäß Figur 5 in einer Freigabestellung,
- Fig. 7: eine längsgeschnittene Seitenansicht einer Ausführungsform eines erfindungsgemäßen Rollenfördermoduls,
- Fig. 7a: eine Detailansicht eines Ausschnitts aus Figur 1,
- Fig. 8: eine perspektivische Detailansicht der Ausführungsform gemäß Figur 1,
- Fig. 9a-d: den Ablauf einer Vereinzelung von Fördergütern mittels der zweiten Ausführungsform,

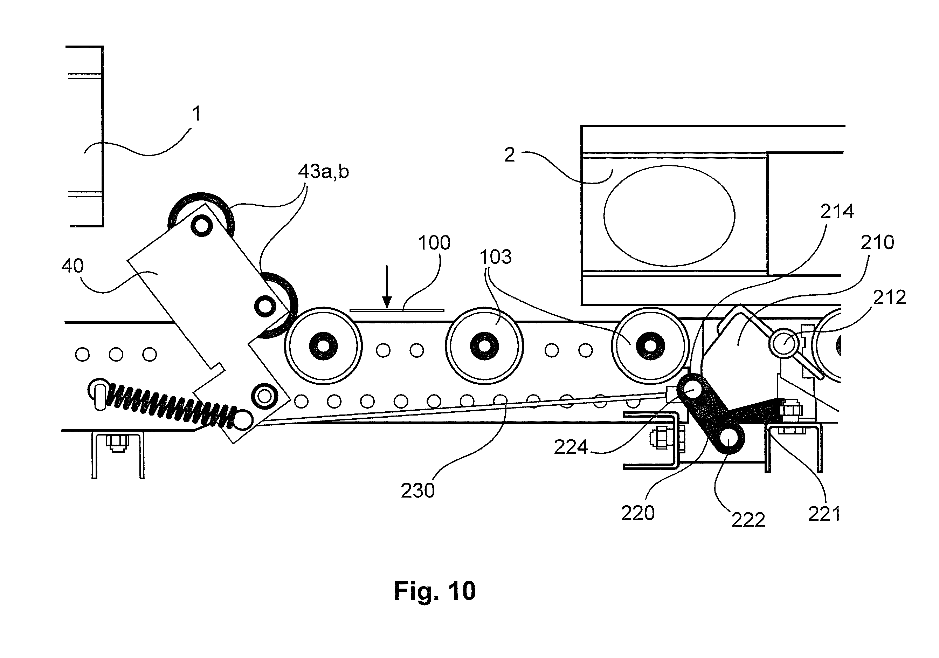

- Fig. 10: eine Detailansicht eines Ausschnitts aus Figur 9c
- Fig. 11: eine Seitenansicht eines Details einer dritten Ausführungsform in einer Sperrstellung
- Fig. 12: eine Ansicht gemäß Figur 5 in einer Freigabestellung, Nur die in den Figuren 11 und 12 gezeigte Ausführungsform gehört zur Erfindung.

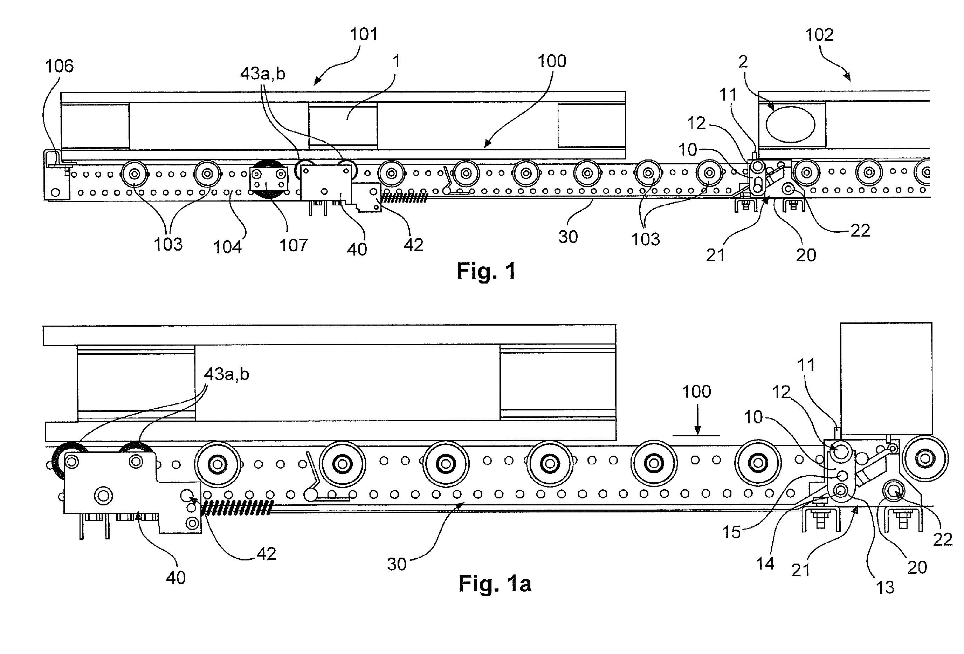

Bezugnehmend zunächst auf Figur 1 ist ein Endbereich eines Rollenfördermoduls gezeigt, in dem ein erstes Fördergut 1 in einer Endposition 101 angeordnet ist und ein zweites Fördergut 2 in einer Warteposition 102 angeordnet ist. Das Rollenfördermodul weist eine Vielzahl von Rollen 103 auf, die in zwei seitlich angeordneten Längsstreben 104, 105 befestigt sind und drehbar gelagert sind. Am Ende des Rollenfördermoduls ist ein Endanschlag 106 angeordnet, der unbeweglich ist und das Fördergut 1 in der Endposition an einer Weiterförderung hindert. Weiterhin ist eine Bremsrolle 107 solcherart positioniert, dass sie ein Fördergut, welches in die Halteposition hinein gefördert wird, abbremsen kann und dadurch ein abruptes Anschlagen am Endanschlag 106 verhindern kann.

Das zweite Fördergut 2 wird in seiner Warteposition auf seiner zum ersten Fördergut 1 weisenden Seite durch einen Sperrabschnitt 11 eines Sperrhebels 10 gehalten. Der Sperrhebel 10 ist mittels einer Sperrhebelachse 12 schwenkbar gelagert.

Die Sperrhebelachse 12 liegt zwischen dem Sperrabschnitt 11 und einer Arretierfläche 13 am Sperrhebel 10. Die Arretierfläche 13 steht in Kontakt zu einer Verriegelungsfläche 21 an einem Verriegelungselement 20. Die von dem Fördergut 2 auf die Sperrfläche übertragene Kraft wird von dem Verriegelungselement in Kontakt zwischen Verriegelungsfläche und Arretierfläche aufgenommen.

Das Verriegelungselement 20 ist um eine Schwenkachse 22 schenkbar gelagert, die wie die Sperrhebelachse 12 unterhalb der Auflagefläche 100 des Rollenfördermoduls liegt und ihrerseits wiederum unterhalb der Sperrhebelachse liegt. An dem Sperrhebel ist eine Rolle 14 in einem Langloch 15 drehbar und verschieblich gelagert. Diese Rolle 14 stellt die Arretierfläche 13 des Sperrhebels dar und stützt sich an der Verriegelungsfläche des Verriegelungselements 20 ab.

Das Verriegelungselement 20 ist mittels einer Zugstange 30 mit einem Betätigungshebel 40 mechanisch gekoppelt. Der Betätigungshebel 40 ist um eine auf gleicher Höhe wie die Sperrelementachse gelagerte Betätigungshebelachse 42 schwenkbar gelagert. Der Betätigungshebel weist an seinem der Betätigungshebelachse gegenüberliegenden Ende zwei Rollen 43 a,b auf, die in der in Figur 1 dargestellten Halteposition des Betätigungshebels mit ihren Oberseiten fluchtend zu den Oberseiten der Förderrollen 103 des Rollenfördermoduls liegen.

In den Figuren 1 bis 3 ist das Rollenfördermodul in einer Funktionsposition gezeigt, in der das Fördergut 2 in der Warteposition gehalten und an einer Weiterförderung gehindert wird. Der Betätigungshebel 40 befindet sich hierzu in der Halteposition, das Verriegelungselement 20 in der Verriegelungsposition und der Sperrhebel 10 wird hierdurch in der Sperrposition verriegelt.

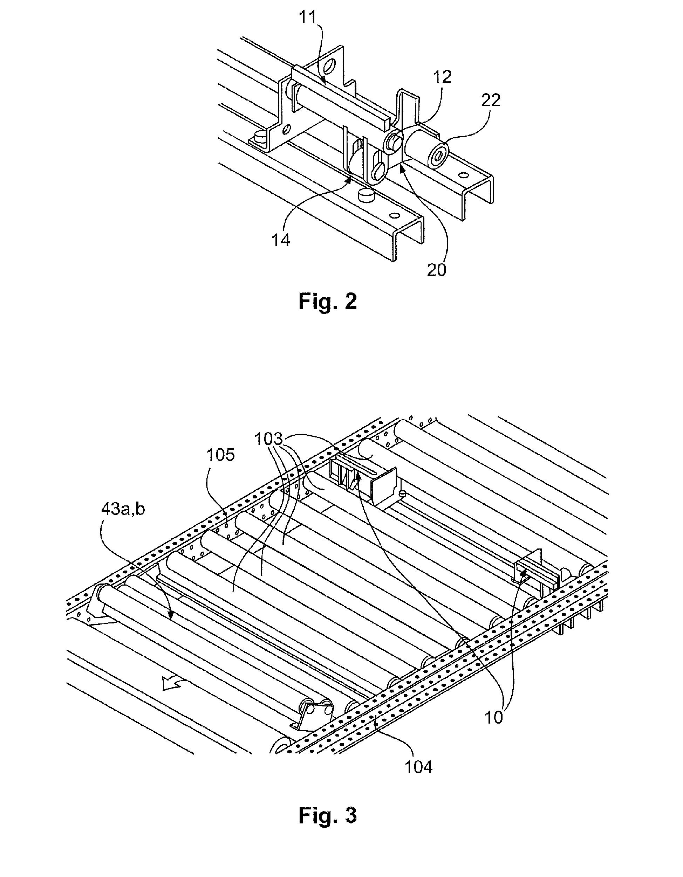

Wie insbesondere aus Figur 3 ersichtlich, erstrecken sich die beiden Rollen 43a,b des Betätigungshebel über die gesamte Breite der durch das Fördermodul dargestellten Förderstrecke. Desweiteren ist ersichtlich, dass insgesamt zwei Sperrhebel auf einer Höhe und an einen Punkt der Förderstrecke angeordnet sind und jeweils benachbart innenliegend zu den Längsstreben 104, 105 des Rollenfördermoduls angeordnet sind.

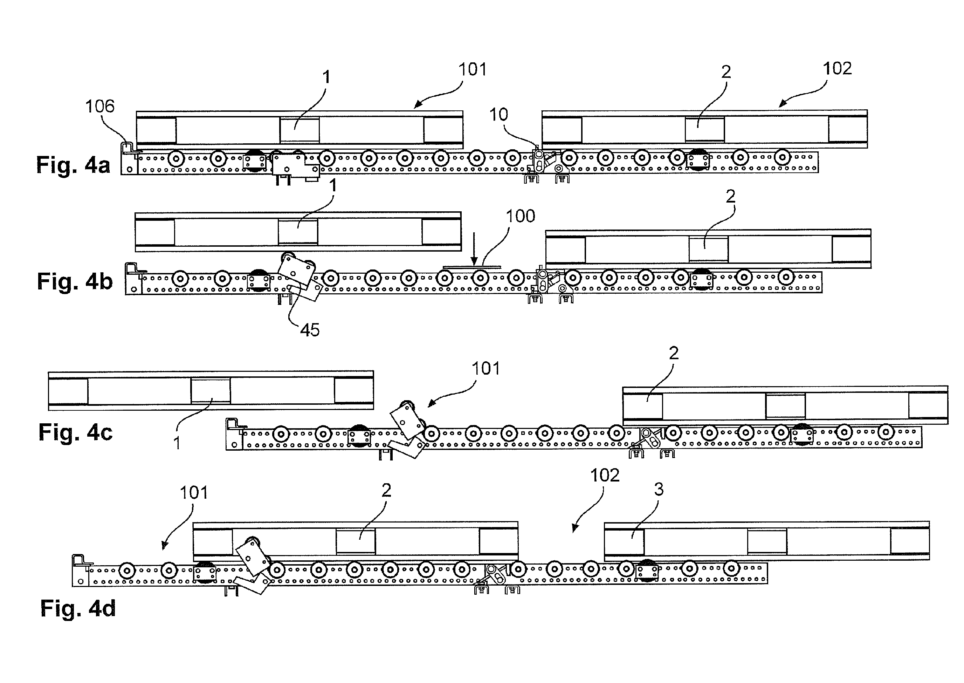

Aus den Figuren 4a - d geht der Ablauf eines Vereinzelungsvorgangs am erfindungsgemäßen Rollenfördermodul hervor. Figur 1a zeigt die Position gemäß Figur 1, in der zwei Fördergüter 1 und 2 in einer Endposition 101 und einer Warteposition 102 durch den Endanschlag 106 bzw. den Sperrhebel 10 gehalten sind.

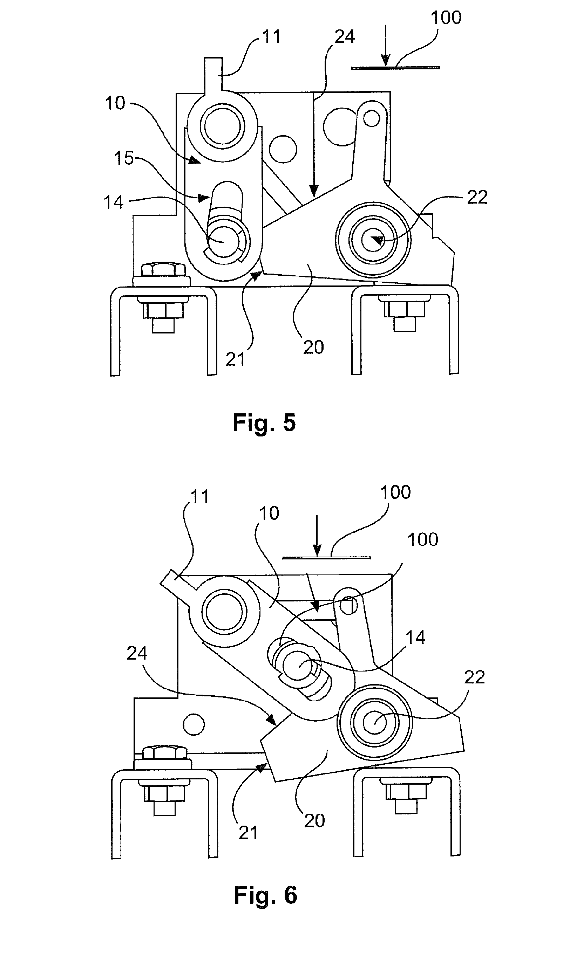

Wird das Fördergut 1 angehoben, beispielsweise durch einen Gabelstapler, so folgt der Betätigungshebel aufgrund einer durch eine Feder ausgeübten Vorspannung aus seiner Halteposition in eine Auslöseposition, die er nach etwa 80 Prozent des Weges erreicht, dies ist in Figur 4c dargestellt. Sobald der Betätigungshebel seine Auslöseposition gemäß Figur 4c erreicht hat, wird durch die Zugspanne 30 das Verriegelungselemen 20 aus seiner in Figur 5 gezeigten Verriegelungsposition in die in Figur gezeigte Entriegelungsposition verschwenkt. Die Rolle 14 am Sperrhebel stützt sich folglich nicht weiter an der Verriegelungsfläche des Verriegelungselementes ab, sondern kann an der Entriegelungsfläche 24 entlang rollen und bewegt sich hierbei zudem translatorisch im Langloch 15 des Sperrhebels. Der Sperrhebel verschwenkt folglich, wodurch die Sperrfläche 11 unter die Auflagefläche 100 der Rollen 103 bewegt wird.

Durch diese Verschwenkung des Sperrhebels wird die Förderung des Fördergutes 2 aus der Warteposition 102 in die Endposition 101 ermöglicht.

Das Fördergut 2 bewegt sich, nach einer bestimmten Wegstrecke gebremst durch die Bremsrolle 107 in die Endposition 101 und ein drittes Fördergut 3 bewegt sich aus der vorangehenden Förderstrecke in die Warteposition 102.

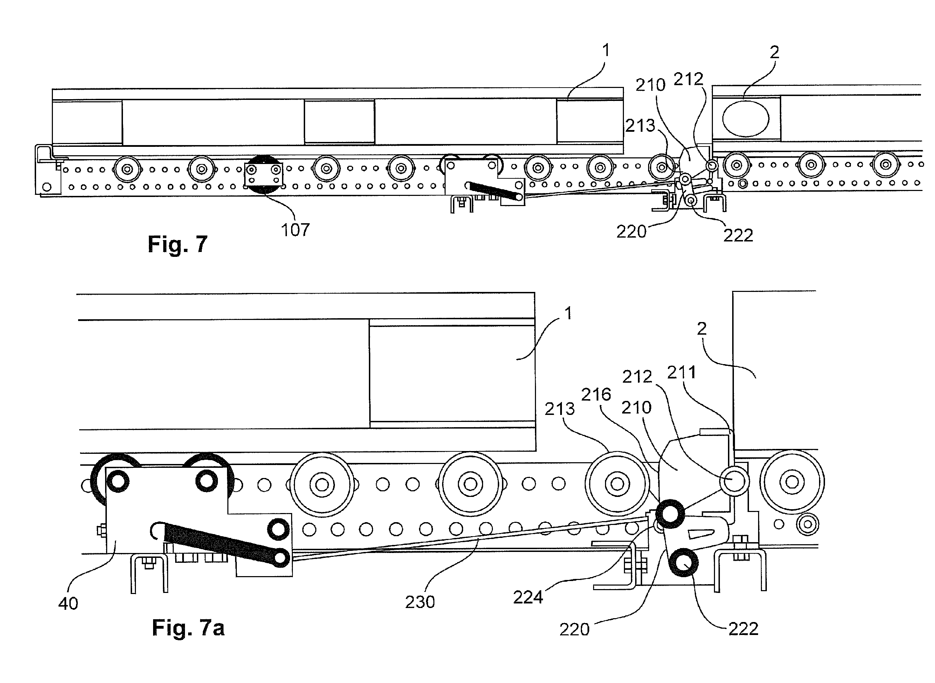

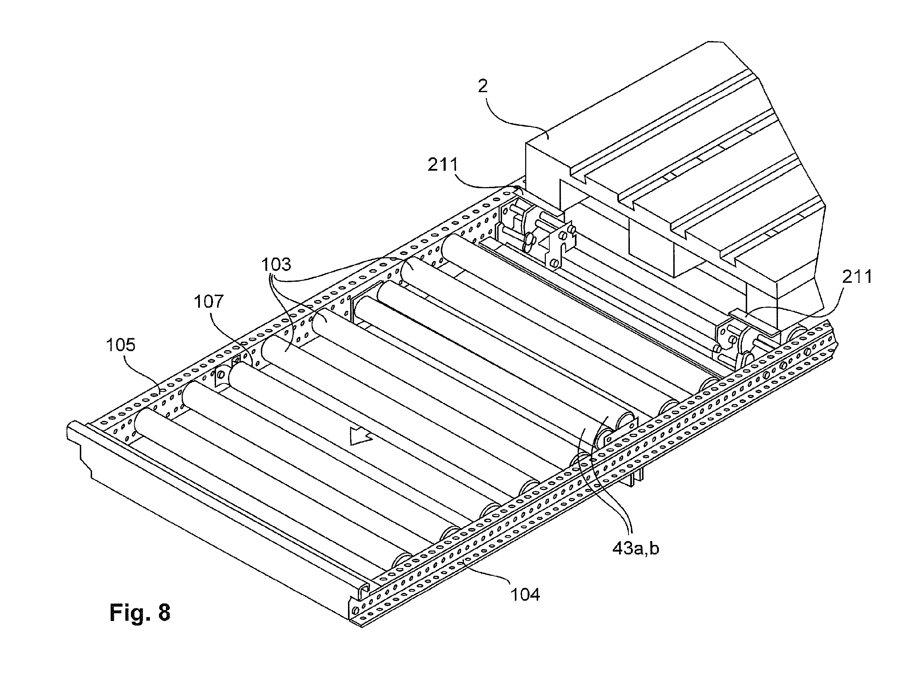

In den Figuren 7, 7a und 8 ist eine zweite Ausführungsform dargestellt. Bei dieser zweiten Ausführungsform sind die Förderstrecke, die Bremsrolle und Endanschlag sowie der Betätigungshebel in gleicher Weise ausgeführt wie in der ersten Ausführungsform gemäß Figuren 1- 6. Nachfolgend wird lediglich auf Unterschiede zwischen dieser ersten Ausführungsform und der zweiten Ausführungsform eingegangen.

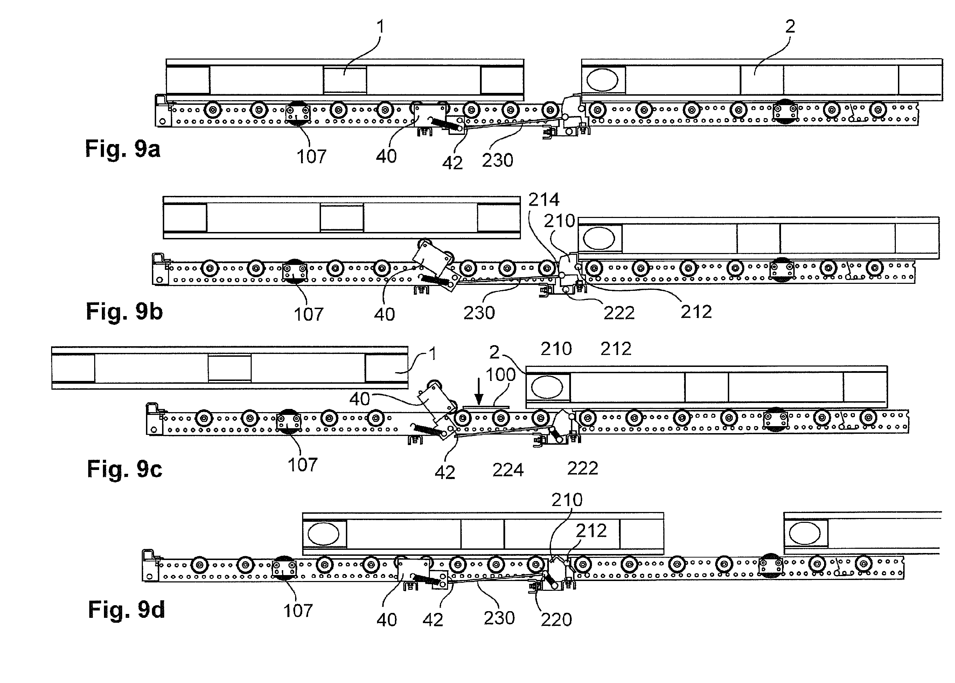

Bei der zweiten Ausführungsform wird das Verriegelungselement durch einen um eine Verriegelungsachse 222 schwenkbar gelagerten Verriegelungshebel 220 gebildet. Dieser Verriegelungshebel 220 weist an seinem der Verriegelungselementachse 222 gegenüber liegenden Ende eine Rolle 224 auf, welche in der in Figur 7 und Figur 9a gezeigten Verriegelungsposition in Kontakt mit einer Arretierfläche 213 eines Sperrhebels 210 steht. Der Sperrhebel 210 ist als Volumenkörper ausgebildet und um eine Sperrhebelachse 212 schwenkbar gelagert. Am Sperrhebel ist eine Sperrfläche 211 ausgebildet, die sich in der Sperrposition über die Auflagefläche der Rollenförderstrecke erstreckt.

Benachbart zur Arretierfläche 213 des Sperrhebels 10 ist eine Entriegelungsfläche 216 ausgebildet.

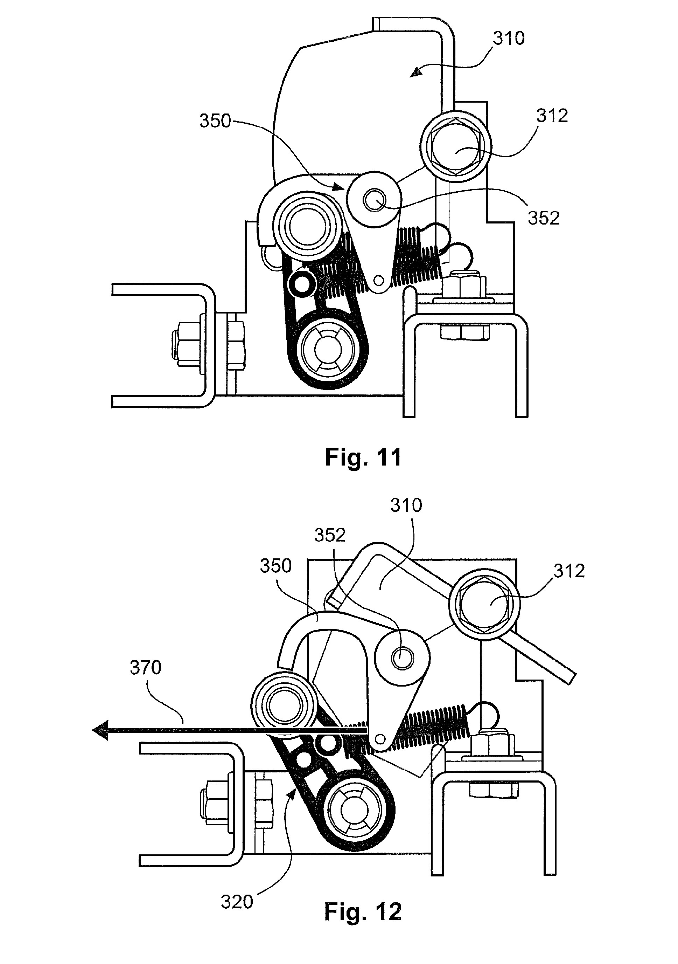

Wird der Verriegelungshebel 220 mittels eines Zugkabels 230 aus der in den Figuren 7 und 9a,b gezeigten Position in eine in den Figuren 9c und 9d gezeigte Entriegelungspositionen verschwenkt, so liegt die Arretierfläche 213 des Sperrhebels 210 nicht mehr im Kontakt mit der Rolle 224 des Verriegelungshebels sondern die Rolle 224 des Verriegelungshebels rollt entlang der Entriegelungsfläche 216 des Sperrhebels ab und ermöglicht hierdurch eine Verschwenkung des Sperrhebels aus der in den Figuren 9a,b gezeigten Sperrposition in die in den Figuren 9c,d gezeigte Freigabeposition. Dies ermöglicht, wie zuvor, das Fördern des Fördergutes 202 aus der Warteposition in die Endposition. In den Figuren 11 und 12 ist eine erfindungsgemäße Ausführugnsform gezeigt. Diese dritte Ausführungsform basiert im Prinzip auf der zuvor erläuterten zweiten Ausführungsform. Die dritte Ausführungsform unterscheidet sich jedoch von der zweiten Ausführungsform darin, dass zusätzlich zu einem Verriegelungshebel 320 ein Verriegelungshaken 350 bereitgestellt ist. Der Verriegelungshaken 350 ist um eine Verriegelungshakenachse 352 schwenkbar gelagert und mittels eines Zugkabels 370 mit dem Betätigungshebel mechanisch gekoppelt. Durch Zugwirkung entlang des Zugkabels 370 wird der Verriegelungshaken aus einer in Figur 11 dargestellten Sicherungsposition, in welcher er eine Verschwenkung des Verriegelungshebels 320 verhindert, in eine in Figur 12 gezeigte Entsicherungsposition verschwenkt und ermöglicht hierdurch eine Verschwenkung des Verriegelungshebels 320 aus der Verriegelungsposition in die Entriegelungsposition. Mit dieser dritten Ausführungsform wird eine zusätzliche Sicherungsposition bereit gestellt, die eine versehentliche oder vorzeitige Freigabe des Förderguts aus der Warteposition zuverlässig verhindern kann.

Mit der erfindungsgemäß bereitgestellten Ausführungsform wird erreicht, dass auch schwere Fördergüter zuverlässig in der Warteposition gehalten werden können, ohne das hierzu hohe Kräfte zwischen den einzelnen Bauteilen, insbesondere Sperrhebel, Verriegelungshebel und Betätigungshebel wirken und folglich eine zuverlässige und reproduzierbare Auslösung des Sperrhebels auch bei Anliegen schwerer Fördergüter möglich ist.

## Patentansprüche

1. Rollenfördermodul mit einer Separationsvorrichtung für eine schwerkraftbetätigte Rollenförderanlage, umfassend:
- Eine aus mehreren hintereinander angeordneten Förderrollen (103) gebildete Förderstrecke, welche eine vom Umfang der Förderrollen definierte obere Auflagefläche (100) für Fördergut (1, 2, 3) ausbildet,
- einen beweglichen Sperrhebel (310) mit einer Arretierfläche und einem Sperrabschnitt, der sich
o in einer Sperrposition über die Auflagefläche (100) erstreckt und eine Sperrung eines Förderguts (2) auf der Auflagefläche bewirkt,
o in einer Freigabeposition unter die Auflagefläche verschwenkbar ist oder unterhalb der Auflagefläche liegt und keine Sperrung eines Förderguts auf der Auflagefläche bewirkt,
- ein bewegliches Verriegelungselement (320) mit einer Verriegelungsfläche (221), das
o in einer Verriegelungsposition in Kontakt mit der Arretierfläche steht und eine Bewegung des Sperrhebels aus dessen Sperrposition in Richtung der Freigabeposition verhindert,
o in einer Entriegelungsposition eine Bewegung des Sperrhebels aus dessen Sperrposition in Richtung der Freigabeposition freigibt, und
- einen in Förderrichtung des Fördermoduls abwärts von dem Sperrhebel (210) angeordneten beweglichen Betätigungshebel (40), mit
o einem Betätigungsabschnitt, der sich in einer Auslöseposition über die Auflagefläche (43 a,b) erstreckt und in einer Halteposition unterhalb oder in der Auflagefläche liegt,
o einer Kopplungsvorrichtung (370) zur mechanischen Kopplung des Betätigungshebels mit dem Verriegelungselement (320) in solcher
Weise, dass durch diese Kopplung das Verriegelungselement
▪ in der Auslöseposition des Betätigungshebels in die Entriegelungsposition bewegt, insbesondere verschwenkt ist, und
▪ in der Halteposition des Betätigungshebels in die Verriegelungsposition bewegt ist,
wobei
- der Sperrhebel (310) um eine unterhalb der Auflagefläche angeordnete Sperrhebelachse (312) schwenkbar gelagert ist, die Arretierfläche und eine an die Arretierfläche angrenzende Entriegelungsfläche (216) aufweist,
- an dem Verriegelungselement (320) eine Rolle (224) angeordnet ist, und
das Verriegelungselement und der Sperrhebel solcherart beweglich gelagert sind, dass
- die Rolle sich in der Verriegelungsposition an der Arretierfläche (213) des Sperrhebels abstützt und hierdurch eine Verschwenkung des Sperrhebels in einer Richtung, in der sich die Sperrfläche in Förderrichtung bewegt, blockiert,
- die Rolle (224) in der Entriegelungsposition bei Verschwenkung des Sperrhebels in einer Richtung, in der sich die Sperrfläche in Förderrichtung bewegt, entlang der Entriegelungsfläche (216) entlangrollt,
**dadurch gekennzeichnet, dass**
- das Verriegelungselement einen Verriegelungshebel (320) und einen relativ zum Verriegelungshebel beweglichen Verriegelungshaken (350) umfasst,
- der Verriegelungshaken mechanisch (370) mit dem Betätigungshebel (40) gekoppelt ist und
- der Verriegelungshebel und der Verriegelungshaken solcherart beweglich gelagert sind, dass
- der Verriegelungshaken (350) in einer Sicherungsposition in den Verriegelungshebel (320) eingehakt ist und den Verriegelungshebel in der Verriegelungsposition fixiert, in der dieser eine Verschwenkung des Sperrhebels (310) in die Freigabeposition blockiert, und
- der Verriegelungshaken durch die Kopplung mit dem Betätigungshebel aus der Sicherungsposition in eine Entsicherungsposition bewegt, insbesondere verschwenkt wird und hierdurch eine Verschwenkung des Verriegelungshebels aus der Verriegelungsposition in die Entriegelungsposition freigibt, wenn der Betätigungshebel aus der Halteposition in die Freigabeposition bewegt wird.

2. Rollenfördermodul nach Anspruch 1,
**dadurch gekennzeichnet, dass**
- der Sperrhebel (310) um eine unterhalb der Auflagefläche (100) angeordnete Sperrhebelachse (312) schwenkbar gelagert ist und in der Freigabeposition gegenüber der Sperrposition um die Sperrhebelachse verschwenkt ist,
- das Verriegelungselement (320) um eine unterhalb der Auflagefläche angeordnete Verriegelungselementachse schwenkbar gelagert ist, und/oder
- der Betätigungshebel (40) schwenkbar um eine unterhalb der Auflagefläche angeordnete Betätigungshebelachse gelagert ist.

3. Rollenfördermodul nach Anspruch 1 oder 2,
**dadurch gekennzeichnet, dass**
- der Sperrhebel (310) um eine unterhalb der Auflagefläche angeordnete Sperrhebelachse (312) schwenkbar gelagert ist und die Arretierfläche an einer an dem Sperrhebel angeordneten Rolle (14) ausgebildet ist,
- das Verriegelungselement (320) eine Verriegelungsfläche (221) und eine an die Verriegelungsfläche angrenzende Entriegelungsfläche (24) aufweist und das Verriegelungselement und der Sperrhebel solcherart beweglich gelagert sind, dass
- die Rolle (14) sich in der Verriegelungsposition an der Verriegelunsgfläche (221) abstützt und hierdurch eine Verschwenkung des Sperrhebels in einer Richtung, in der sich die Sperrfläche in Förderrichtung bewegt, blockiert,
- die Rolle (14) in der Entriegelungsposition bei Verschwenkung des Sperrhebels in einer Richtung, in der sich die Sperrfläche in Förderrichtung bewegt, entlang der Entriegelungsfläche (24) entlangrollt.

4. Rollenfördermodul nach einem der vorhergehenden Ansprüche,
**dadurch gekennzeichnet, dass**
- der Sperrhebel (310) durch ein Gegengewicht oder eine Vorspannkraft in die Sperrposition vorgespannt ist,
- das Verriegelungselement (320) durch ein Gegengewicht oder eine Vorspannkraft in die Verriegelungsposition vorgespannt ist, und/oder
- der Betätigungshebel (40) durch ein Gegengewicht oder eine Vorspannkraft in die Auslöseposition vorgespannt ist.

5. Rollenfördermodul nach einem der vorhergehenden Ansprüche,
**dadurch gekennzeichnet, dass**
- der Betätigungshebel (40) aus einer unterhalb der Auflagefläche liegenden Auslöseposition in eine oberhalb der Auflagefläche liegenden Halteposition bewegbar ist,
- die Halteposition durch einen Endanschlag begrenzt wird, und
- der Betätigungshebel solcherart mit dem Verriegelungselement (320) mechanisch
gekoppelt ist, dass das Verriegelungselement bei der Bewegung des Betätigungshebels aus der Halteposition in die Auslöseposition erst nach 80% des Gesamtwegs zwischen Halte- und Auslöseposition in die Entriegelungsposition bewegt wird, so dass der Sperrhebel (310) aus der Sperr- in die Freigabeposition bewegbar ist.

6. Rollenfördermodul nach einem der vorhergehenden Ansprüche,
**dadurch gekennzeichnet, dass** der Betätigungshebel (40) zumindest um weniger als die Länge von einer Europalette von dem Sperrhebel (310) beabstandet ist.

7. Rollenfördermodul nach einem der vorhergehenden Ansprüche,
**dadurch gekennzeichnet, dass** der Betätigungshebel mit dem Verriegelungselement über eine Zug- oder Druckstange (30) oder ein Zugkabel (370) verbunden ist.

8. Rollenfördermodul nach einem der vorhergehenden Ansprüche,
**gekennzeichnet durch** einen an dem in Förderrichtung hinteren Ende des Rollenfördermoduls angeordneten Endanschlag (106), der vorzugsweise um mehr als die Länge einer Europalette von dem Sperrhebel beabstandet ist.

## Claims

1. Roller conveying module with a separation device for a gravity-operated roller conveying system, comprising:
- a conveyor line formed from several consecutively arranged conveyor rollers (103) which forms an upper supporting surface (100), defined by the circumference of the conveyor rollers, for conveyed material (1, 2, 3),
- a movable ratchet lever (310) with a stopping surface and a 'disable' section, which
o in a disable position extends across the supporting surface (100) and brings about a stoppage of a conveyed material (2) on the supporting surface,
o in an enable position can be swivelled underneath the supporting surface or lies beneath the supporting surface and does not bring about any stoppage of a conveyed material on the supporting surface.
- a moveable locking element (320) with a locking surface (221), which
o in a locking position is in contact with the stopping surface and prevents movement of the ratchet lever from its disable position in the direction of the enable position.
o in an unlocking position, releases a movement of the ratchet lever from its disable position in the direction of the enable position, and
- a moveable operating lever (40) arranged in the conveying direction of the conveyor module downwards of the ratchet lever (210) with
o an operating section which, in a release position, extends across the supporting surface (43 a, b) and lies in a holding position below or in the supporting surface,
o a linking device (370) for the mechanical linking of the operating lever with the locking element (320) in such a way that, through this link, the locking element
▪ in the release position of the operating lever is moved, in particular is swivelled, into the unlocking position and
▪ in the holding position of the operating lever is moved into the locking position,
whereby
- the ratchet lever (310) is mounted so as to be pivotable around a ratchet lever axis (312) which is positioned beneath the supporting surface, which has a stopping surface and an unlocking surface (216) adjacent to the stopping surface,
- a roller (224) is arranged on the locking element (320), and the locking element and the ratchet lever are mounted moveably in such a way that
- the roller, in the locking position, is supported on the stopping surface (213) of the ratchet lever and as a result blocks a swivelling of the ratchet lever in a direction in which the disable surface moves in the direction of conveying,
- the roller (224), in the unlocking position, upon swivelling of the ratchet lever rolls along in a direction in which the disable surface moves in the direction of conveying, along the unlocking surface (216),
**characterised in that**
- the locking element comprises a locking lever (320) and a lock hook (350) which is moveable relative to the locking lever,
- the lock hook is mechanically (370) linked to the operating lever (40) and
- the locking lever and the lock hook are moveably mounted in such a way that
- the lock hook (350) is hooked, in a securing position, into the locking lever (320) and fixes the locking lever in the locking position in which the latter blocks a swivelling of the ratchet lever (310) into the enable position and
- the lock hook, through the link with the operating lever, moves, in particular is swivelled, from the securing position into an unsecured position and as a result of this releases a swivelling of the locking lever from the locking position into the unlocking position when the operating lever is moved from the holding position into the enable position.

2. Roller conveying module according to Claim 1, **characterised in that**
- the ratchet lever (310) is mounted so as to be pivotable around a ratchet lever axis (312) positioned beneath the supporting surface and in the enable position is swivelled opposite the disable position around the ratchet lever axis.
- the locking element (320) is mounted so as to be pivotable around a locking element axis positioned below the supporting surface, and/or the operating lever (40) is mounted so as to be pivotable around an operating lever axis positioned below the supporting surface.

3. Roller conveying module according to Claim 1 or 2,
**characterised in that**
- the ratchet lever (310) is mounted so as to be pivotable around a ratchet lever axis positioned below the supporting surface and the stopping surface is formed on a roller (14) positioned on the ratchet lever,
- the locking element (320) has a locking surface (221) and an unlocking surface (24) adjacent to the locking surface and the locking element and the ratchet lever are moveably mounted in such a way that
- the roller (14), in the locking position, is supported on the locking surface (221) and as a result blocks a swivelling of the ratchet lever in a direction in which the disable surface moves in the direction of conveying,
- the roller (14), in the unlocking position, upon swivelling of the ratchet lever in a direction in which the disable surface moves in the direction of conveying, rolls along the unlocking surface (24).

4. Roller conveying module according to any one of the preceding claims, **characterised in that**
- the ratchet lever (310) is pre-tensioned through a counterweight or a preload force into the disable position,
- the locking element (320) is pre-tensioned through a counterweight or a preload force into the locking position and/or the operating lever (40) is pre-tensioned through a counterweight or a preload force into the release position.

5. Roller conveying module according to any one of the preceding claims, **characterised in that**
- the operating lever (40) is moveable out of a release position situated beneath the supporting surface into a holding position situated above the supporting surface,
- the holding position is limited by an end stop, and
- the operating lever is mechanically linked to the locking element (320) in such a way that the locking element, on movement of the operating lever out of the holding position into the release position, is only moved into the unlocking position after 80% of the total distance between the holding and release position, so that the ratchet lever (310) is moveable out of the disable position into the enable position.

6. Roller conveying module according to any one of the preceding claims, **characterised in that**
the operating lever (40) is at a distance that is less than the length of one Europallet f rom the ratchet lever (310).

7. Roller conveying module according to any one of the preceding claims,
**characterised in that** the operating lever is connected to the locking element by mean s of a tension rod or push bar (30) or a pull cable (70).

8. Roller conveying module according to any one of the preceding claims, **characterised by** an end stop (106) arranged at the - in the direction of conveying - rear end of the roller conveying module which is preferably at a distance that is more than the length of one Europallet from the ratchet lever.

## Revendications

1. Module de transport à rouleaux avec un dispositif de séparation pour une installation de transport à rouleaux actionnée par la force de gravité, comprenant :
- une voie de transport formée par plusieurs rouleaux de transport (103) agencés les uns derrière les autres, qui réalise une surface d'installation (100) supérieure définie par la périphérie des rouleaux de transport pour des produits de transport (1, 2, 3),
- un levier de blocage (310) mobile avec une surface d'arrêt et une section de blocage qui
s'étend dans une position de blocage sur la surface d'installation (100) et provoque un blocage d'un produit de transport (2) sur la surface d'installation,
peut être pivotée dans une position de libération sous la surface d'installation ou se trouve sous la surface d'installation et ne provoque aucun blocage d'un produit de transport sur la surface d'installation,
- un élément de verrouillage mobile (320) avec une surface de verrouillage (221) qui est dans une position de verrouillage en contact avec la surface d'arrêt et empêche un mouvement du levier de blocage de sa position de blocage en direction de la position de libération,
libère dans une position de déverrouillage un mouvement du levier de blocage de sa position de blocage en direction de la position de libération et
- un levier d'actionnement (40) mobile agencé dans le sens de transport du module de transport vers le bas du levier de blocage (210) avec
une section d'actionnement qui s'étend dans une position de détachement sur la surface d'installation (43a, b) et se trouve dans une position de maintien sous ou dans la surface d'installation,
un dispositif de couplage (370) pour le couplage mécanique du levier d'actionnement avec l'élément de verrouillage (320) de telle manière que par ce couplage, l'élément de verrouillage
se déplace, en particulier soit pivoté, lorsqu'il est dans la position de détachement du levier d'actionnement vers la position de déverrouillage, et
soit déplacé, lorsqu'il est dans la position de maintien du levier d'actionnement vers la position de verrouillage,
- le levier de blocage (310) étant logé de manière pivotante autour d'un axe de levier de blocage (312) agencé sous la surface d'installation, présentant la surface d'arrêt et une surface de déverrouillage (216) contiguë à la surface d'arrêt,
- un rouleau (224) étant agencé sur l'élément de verrouillage (320), et
l'élément de verrouillage et le levier de blocage étant logés de manière mobile de telle manière que
- le rouleau s'appuie dans la position de verrouillage sur la surface d'arrêt (213) du levier de blocage et bloque par là même un pivotement du levier de blocage dans une direction, dans laquelle la surface de blocage se déplace dans le sens de transport,
- le rouleau (224) roulant dans la position de déverrouillage lors du pivotement du levier de blocage dans une direction, dans laquelle la surface de blocage se déplace dans le sens de transport, le long de la surface de déverrouillage (216),
**caractérisé en ce que**
- l'élément de verrouillage comporte un levier de verrouillage (320) et un crochet de verrouillage (350) mobile par rapport au levier de verrouillage,
- le crochet de verrouillage est couplé mécaniquement (370) au levier d'actionnement (40), et
- le levier de verrouillage et le crochet de verrouillage sont logés de manière mobile de telle manière que
- le crochet de verrouillage (350) est accroché dans une position de sécurité dans le levier de verrouillage (320) et fixe le levier de blocage dans la position de verrouillage, dans laquelle celui-ci bloque un pivotement du levier de blocage (310) dans la position de libération, et
- le crochet de verrouillage se déplace, en particulier est pivoté, par le couplage avec le levier d'actionnement de la position de sécurité à une position relâchée et libère par là même un pivotement du levier de verrouillage de la position de verrouillage à la position de déverrouillage lorsque le levier d'actionnement est déplacé de la position de maintien à la position de libération.

2. Module de transport à rouleaux selon la revendication 1, **caractérisé en ce que**
- le levier de blocage (310) est logé de manière pivotante autour d'un axe de levier de blocage (312) agencé sous la surface d'installation (100) et est pivoté dans la position de libération par rapport à la position de blocage autour de l'axe de levier de blocage,
- le levier de verrouillage (320) est logé de manière pivotante autour d'un axe d'élément de verrouillage agencé sous la surface d'installation, et/ou
- le levier d'actionnement (40) est logé de manière pivotante autour d'un axe de levier d'actionnement agencé sous la surface d'installation.

3. Module de transport à rouleaux selon la revendication 1 ou 2, **caractérisé en ce que**
- le levier de blocage (310) est logé de manière pivotante autour d'un axe de levier de blocage (312) agencé sous la surface d'installation et la surface d'arrêt est réalisée sur un rouleau (14) agencé sur le levier de blocage,
- l'élément de verrouillage (320) présente une surface de verrouillage (221) et une surface de déverrouillage (24) contiguë à la surface de verrouillage et l'élément de verrouillage et le levier de blocage sont logés de manière mobile de telle manière que
- le rouleau (14) s'appuie dans la position de verrouillage sur la surface de verrouillage (221) et bloque par là même un pivotement du levier de blocage dans une direction, dans laquelle la surface de blocage se déplace dans le sens de transport,
- le rouleau (14) roule dans la position de déverrouillage lors du pivotement du levier de blocage dans une direction, dans laquelle la surface de blocage se déplace dans le sens de transport, le long de la surface de déverrouillage.

4. Module de transport à rouleaux selon l'une quelconque des revendications précédentes, **caractérisé en ce que**
- le levier de blocage (310) est précontraint par un contrepoids ou une force de précontrainte dans la position de blocage,
- l'élément de verrouillage (320) est précontraint par un contrepoids ou une force de précontrainte dans la position de verrouillage, et/ou
- le levier d'actionnement (40) est précontraint par un contrepoids ou une force de précontrainte dans la position de détachement.

5. Module de transport à rouleaux selon l'une quelconque des revendications précédentes, **caractérisé en ce que**
- le levier d'actionnement (40) peut être déplacé d'une position de détachement se trouvant sous la surface d'installation dans une position de maintien se trouvant au-dessus de la surface d'installation,
- la position de retenue est délimitée par une butée finale, et
- le levier d'actionnement est couplé mécaniquement à l'élément de verrouillage (320) de telle manière que l'élément de verrouillage ne soit déplacé lors du mouvement du levier d'actionnement de la position de maintien à la position de détachement qu'après 80 % de la course totale entre la position de maintien et de détachement dans la position de déverrouillage de sorte que le levier de blocage (310) soit déplaçable de la position de blocage à la position de libération.

6. Module de transport à rouleaux selon l'une quelconque des revendications précédentes, **caractérisé en ce que** le levier d'actionnement (40) est espacé au moins de moins de la longueur d'une europalette du levier de blocage (310).

7. Module de transport à rouleaux selon l'une quelconque des revendications précédentes, **caractérisé en ce que** le levier d'actionnement est relié à l'élément de verrouillage par une barre de traction et de compression (30) ou un câble de traction (370).

8. Module de transport à rouleaux selon l'une quelconque des revendications précédentes, **caractérisé par** une butée finale (106) agencée sur l'extrémité arrière dans le sens de transport du module de transport à rouleaux, qui est espacée de préférence de plus de la longueur d'une europalette du levier de blocage.
